# FASCICULE DE BREVET EUROPEEN

(11) **EP 4 093 948 B1**
(45) Date de publication et mention de la délivrance du brevet: **06.11.2024**
(21) Numéro de dépôt: 21719692.2
(22) Date de dépôt: 14.01.2021
(51) Int. Cl.: F01D 9/04, F01D 9/06

(54) **ENSEMBLE DE STATOR DE TURBOMACHINE COMPRENANT UNE VIROLE INTERNE COMPRENANT DES PARTIES AMONT ET AVAL ASSEMBLÉES PAR TRANSLATION AXIALE**
STATORANORDNUNG EINER TURBOMASCHINE MIT EINEM INNEREN DECKBAND MIT DURCH AXIALE TRANSLATION MONTIERTEN VOR- UND NACHGELAGERTEN ABSCHNITTEN
TURBOMACHINE STATOR ASSEMBLY COMPRISING AN INNER SHROUD HAVING UPSTREAM AND DOWNSTREAM PORTIONS ASSEMBLED BY AXIAL TRANSLATION

(30) Priorité: 23.01.2020 FR 2000640
(43) Date de publication de la demande: 30.11.2022
(73) Titulaire: SAFRAN AIRCRAFT ENGINES, 75015 Paris (FR)
(72) Inventeur: GAILLARD, Aurélien, 77550 MOISSY-CRAMAYEL (FR); CONGRATEL, Sébastien Serge Francis, 77550 MOISSY-CRAMAYEL (FR); JARROSSAY, Clément, 77550 MOISSY-CRAMAYEL (FR); TABARIN, Pascal Cédric, 77550 MOISSY-CRAMAYEL (FR); TABLEAU, Nicolas Paul, 77550 MOISSY-CRAMAYEL (FR)
(74) Mandataire: Brevalex
(86) Numéro de dépôt international: PCT/FR2021/050063
(87) Numéro de publication internationale: WO 2021/148739

(56) Documents cités:
- FR-A1- 2 979 662
- FR-A1- 3 055 656

## Description

### Domaine technique

L'invention se rapporte au domaine des turbomachines, notamment pour ensemble propulsif d'aéronef, et concerne plus spécifiquement un ensemble de stator qui comprend un distributeur de turbine ou un redresseur de compresseur d'une telle turbomachine. L'invention présente un intérêt particulier, nullement limitatif, pour des turbomachines équipées de stator à aubage en matériau composite à matrice céramique.

### État de la technique antérieure

Un matériau composite à matrice céramique, ci-après désigné par l'expression « matériau CMC » ou « CMC », comprend généralement un renfort fibreux et une matrice céramique, ou partiellement céramique. Un CMC est un composite thermostructural capable de résister à des contraintes thermiques relativement élevées et ayant une masse volumique relativement faible, en particulier inférieure à celle de matériaux métalliques traditionnellement utilisés pour réaliser des composants de turbine de turbomachine.

Dans le domaine aéronautique, il a été proposé de réaliser des aubes d'ensembles de turbine en CMC. Par exemple, le document FR 2 979 662 décrit un distributeur de turbine comprenant des aubes statoriques en CMC. Un tel distributeur permet de réduire la quantité d'air de ventilation utilisée par rapport à un distributeur à aubes métalliques, ce qui permet d'améliorer les performances de la turbomachine. Un autre type de distributeur est également décrit dans le document FR 3 055 656.

De manière générale, un tel ensemble de stator comprend une virole interne et une virole externe entre lesquelles s'étendent radialement les aubes.

Plusieurs approches ont été développées afin de mettre en oeuvre des aubes en CMC dans une turbine de turbomachine.

Selon une première approche, la virole interne, la virole externe et les aubes sont conçues pour être assemblées préalablement à leur intégration au sein de la turbine. Cette approche n'est généralement pas compatible avec l'architecture d'une turbine conventionnelle compte tenu de l'espace disponible entre les parties du rotor recevant de tels ensembles de stator. Le montage d'une telle roue peut nécessiter de modifier l'architecture de la turbine.

Selon une deuxième approche, la virole interne est réalisée en plusieurs secteurs d'anneau conçus pour pouvoir être chacun emboîtés radialement sur une partie respective des aubes préalablement montées avec la virole externe au sein de la turbine. Cette approche permet l'assemblage de l'ensemble de stator au sein d'une turbine conventionnelle. Il existe toutefois un besoin de simplifier le montage de la virole interne.

### Exposé de l'invention

Un but de l'invention est de procurer un ensemble de stator pour distributeur de turbine ou pour redresseur de compresseur de turbomachine autorisant ou facilitant son montage dans la turbomachine.

Un autre but de l'invention est d'assurer une bonne étanchéité du circuit de ventilation traversant cet ensemble.

Un autre but de l'invention est de permettre l'intégration d'un tel ensemble au sein d'une turbomachine conventionnelle.

A cet effet, l'invention a pour objet un ensemble de stator pour turbomachine présentant un axe central longitudinal et comprenant une virole externe s'étendant autour dudit axe central longitudinal, une virole interne concentrique à la virole externe et une aube s'étendant radialement entre la virole interne et la virole externe, l'aube étant reliée à la virole interne via un premier moyen de liaison, l'aube délimitant un canal configuré pour acheminer de l'air de ventilation depuis une cavité s'étendant radialement à l'extérieur de la virole externe vers une cavité s'étendant radialement à l'intérieur de la virole interne.

Selon l'invention, la virole interne comprend une partie amont et une partie aval formant deux pièces distinctes l'une de l'autre et s'étendant respectivement d'un côté axialement amont et d'un côté axialement aval dudit premier moyen de liaison lorsque celles-ci sont dans une configuration assemblée, la partie amont étant configurée pour être placée, lors de l'assemblage de la virole interne, dans la configuration assemblée par translation axiale de cette partie amont par rapport à l'aube dans un premier sens allant dudit côté amont vers ledit côté aval, la partie aval étant configurée pour être placée, lors de l'assemblage de la virole interne, dans la configuration assemblée par translation axiale de cette partie aval par rapport à l'aube dans un deuxième sens allant dudit côté aval vers ledit côté amont, l'ensemble comprenant des deuxièmes moyens de liaison reliant la partie amont et la partie aval de la virole interne l'une à l'autre de manière à les maintenir dans ladite configuration assemblée.

La réalisation de la virole interne en parties amont et aval facilite l'assemblage de l'ensemble et autorise son assemblage au sein d'une turbomachine conventionnelle.

De préférence, la partie amont et/ou la partie aval de la virole interne sont annulaires. Plus préférentiellement, à la fois la partie amont est une partie annulaire et la partie aval est une partie annulaire.

L'expression « partie annulaire » désigne une partie comprenant un périmètre circonférentiellement fermé, c'est-à-dire une structure continue sur deux pi radians. Autrement dit, chacune des parties annulaires amont et aval forme une pièce de révolution autour dudit axe central longitudinal de l'ensemble de stator.

Contrairement à la virole interne d'un ensemble de stator conventionnel, la virole interne de l'invention n'est pas réalisée en secteurs d'anneau mais comprend plusieurs parties annulaires, ce qui autorise le montage de cette virole interne en dernière étape, c'est-à-dire après montage de la virole externe sur un carter de la turbomachine et assemblage des aubes avec la virole externe.

Les parties amont et aval de la virole interne étant annulaires, il en résulte par ailleurs une amélioration de l'étanchéité en partie radialement interne de l'ensemble de stator.

Selon l'invention, l'ensemble comprend en outre un premier organe d'étanchéité solidaire d'une extrémité amont d'une plateforme radialement interne de l'aube et un deuxième organe d'étanchéité solidaire d'une extrémité aval de la plateforme radialement interne de l'aube, la partie amont de la virole interne comprenant une face d'étanchéité axialement en appui sur le premier organe d'étanchéité, la partie aval de la virole interne comprenant une face d'étanchéité axialement en appui sur le deuxième organe d'étanchéité.

De tels organes d'étanchéité et une telle coopération de ceux-ci avec les parties amont et aval de la virole interne permettent d'améliorer encore davantage l'étanchéité en partie radialement interne de l'ensemble de stator tout en simplifiant l'assemblage de l'ensemble de stator.

Dans le cadre d'un tel mode de réalisation, il est préféré que chacun parmi le premier et le deuxième organe d'étanchéité est une languette d'étanchéité s'étendant circonférentiellement autour de l'axe central longitudinal et présentant une partie radialement externe logée dans une gorge respective de la plateforme radialement interne de l'aube et une partie radialement interne formant une face d'appui pour ladite face d'étanchéité de la partie amont et aval respectivement.

Dans un mode de réalisation, les deuxièmes moyens de liaison comprennent des boulons.

De manière générale, de tels moyens de liaison sont de préférence configurés pour appliquer un effort de maintien de la partie amont et la partie aval de la virole interne l'une vis-à-vis de l'autre. Cet effort de maintien peut être orienté axialement et/ou radialement.

A cet effet, les deuxièmes moyens de liaison peuvent s'étendre chacun soit axialement soit radialement.

Dans un mode de réalisation, la virole interne comprend une portion de liaison coopérant avec une portion de liaison de l'aube, le premier moyen de liaison traversant la portion de liaison de la virole interne et la portion de liaison de l'aube de manière à relier l'une à l'autre la virole interne et l'aube.

Selon une première variante, la portion de liaison de la virole interne est formée par un bras radial de la partie amont de cette virole interne.

Selon une deuxième variante, la portion de liaison de la virole interne est formée par un bras radial de la partie aval de cette virole interne.

Selon une troisième variante, la virole interne comprend une partie intermédiaire formant une pièce distincte de chacune des parties amont et aval, cette partie intermédiaire étant fixée aux parties amont et aval lorsque celles-ci sont dans ladite configuration assemblée, la portion de liaison de la virole interne étant formée par un bras radial de la partie intermédiaire de cette virole interne.

Dans un mode de réalisation préféré, la virole interne et la virole externe comprennent chacune un matériau métallique et l'au moins une aube comprend un matériau composite à matrice céramique.

L'invention a aussi pour objet un module tel qu'une turbine ou un compresseur de turbomachine, ce module comprenant un ensemble tel que défini ci-dessus.

L'invention a aussi pour objet une turbomachine comprenant un tel module.

L'invention couvre a fortiori un ensemble propulsif d'aéronef comprenant une telle turbomachine ainsi qu'un aéronef comprenant un tel ensemble propulsif.

Enfin, l'invention a pour objet un procédé d'assemblage d'un ensemble tel que défini ci-dessus.

Selon l'invention, ce procédé comprend une première étape d'assemblage de l'aube avec la virole externe et une deuxième étape d'assemblage de la virole interne avec l'aube assemblée avec la virole externe lors de la première étape, la deuxième étape comprenant une translation axiale de la partie amont dans ledit premier sens et une translation axiale de la partie aval dans ledit deuxième sens.

Un tel procédé permet notamment de faciliter l'assemblage de l'ensemble de stator au sein de la turbomachine, en particulier lorsque celle-ci présente une architecture conventionnelle.

D'autres avantages et caractéristiques de l'invention apparaîtront à la lecture de la description détaillée, non limitative, qui suit.

### Brève description des dessins

La description détaillée qui suit fait référence aux dessins annexés sur lesquels :
[Fig. 1] est une vue schématique en coupe axiale d'un ensemble propulsif d'aéronef conforme à l'invention ;
[Fig. 2] est une demi-vue schématique en coupe axiale d'une partie de turbine comprenant un distributeur, une roue mobile en amont du distributeur et une roue mobile en aval du distributeur, le distributeur comprenant une virole interne conforme à un premier mode de réalisation de l'invention ;
[Fig. 3] est une vue schématique en perspective d'un tronçon circonférentiel d'une partie inférieure d'un distributeur de turbine comprenant une virole interne conforme audit premier mode de réalisation ;
[Fig. 4] est une vue schématique en perspective et en éclaté de tronçons circonférentiels d'une virole externe et d'organes d'étanchéité du distributeur de la figure 3 ;
[Fig. 5] est une vue schématique en perspective d'une partie du distributeur de la figure 3, cette partie comprenant d'une part les éléments de la figure 4 assemblés les uns avec les autres et, d'autre part, trois aubes représentées non-assemblées avec la virole externe ;
[Fig. 6] est une vue schématique en perspective d'une partie du distributeur de la figure 3, cette partie comprenant d'une part les éléments de la figure 5 assemblés les uns avec les autres et, d'autre part, un tronçon circonférentiel d'une partie amont d'une virole interne du distributeur ainsi qu'un tronçon circonférentiel d'un organe d'étanchéité inférieur amont représentés non-assemblés avec les aubes ;
[Fig. 7] est une vue schématique en perspective d'une partie du distributeur de la figure 3, cette partie comprenant d'une part les éléments de la figure 6 assemblés les uns avec les autres et, d'autre part, un tronçon circonférentiel d'une partie aval de la virole interne ainsi qu'un tronçon circonférentiel d'un autre organe d'étanchéité inférieur aval représentés non-assemblés avec les aubes et avec la partie amont de la virole interne ;
[Fig. 8] est une demi-vue schématique en coupe axiale d'une partie inférieure d'un distributeur de turbine comprenant une virole interne conforme à un deuxième mode de réalisation de l'invention ;
[Fig. 9] est une demi-vue schématique en coupe axiale d'une partie inférieure d'un distributeur de turbine comprenant une virole interne conforme à un troisième mode de réalisation de l'invention.

### Description détaillée de modes de réalisation

Les figures comprennent un référentiel L, R et C définissant respectivement des directions longitudinale, radiale et circonférentielle orthogonales entre elles.

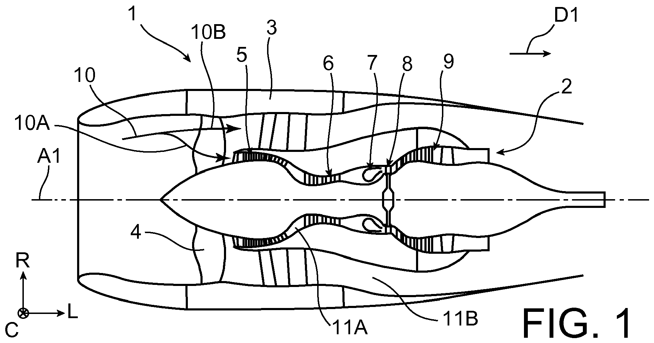

Il est représenté à la figure 1 un ensemble propulsif 1 d'aéronef comprenant une turbomachine 2 carénée par une nacelle 3. Dans cet exemple, la turbomachine 2 est un turboréacteur à double corps et à double flux.

Par la suite, les termes « amont » et « aval » sont définis par rapport à un sens D1 d'écoulement des gaz à travers l'ensemble propulsif 1 lorsque celui-ci est propulsé. Le sens d'écoulement D1 est parallèle à la direction longitudinale L.

Le turboréacteur 2 présente un axe central longitudinal A1 autour duquel s'étendent ses différents composants, en l'occurrence, de l'amont vers l'aval du turboréacteur 2, une soufflante 4, un compresseur basse pression 5, un compresseur haute pression 6, une chambre de combustion 7, une turbine haute pression 8 et une turbine basse pression 9. Autrement dit, ces différents composants s'étendent selon la direction circonférentielle C. Les compresseurs 5 et 6, la chambre de combustion 7 et les turbines 8 et 9 forment un générateur de gaz.

Lors du fonctionnement du turboréacteur 2, un écoulement d'air 10 pénètre dans l'ensemble propulsif 1 par une entrée d'air en amont de la nacelle 3, traverse la soufflante 4 puis se divise en un flux primaire 10A central et un flux secondaire 10B. Le flux primaire 10A s'écoule dans une veine principale 11A de circulation des gaz traversant les compresseurs 5 et 6, la chambre de combustion 7 et les turbines 8 et 9. Le flux secondaire 10B s'écoule quant à lui dans une veine secondaire 11B entourant le générateur de gaz et délimitée radialement vers l'extérieur par la nacelle 3.

De manière connue en soi, une turbine telle que la turbine haute pression 8 ou la turbine basse pression 9 comporte un ou plusieurs étages, chaque étage comprenant un distributeur et une roue mobile. Le distributeur d'un étage comprend une couronne d'aubes statoriques configurées pour dévier le flux primaire 10A provenant de la chambre de combustion 7 vers les aubes de la roue mobile du même étage de manière à entraîner cette roue mobile en rotation. Pour chacune des turbines 8 et 9, le ou les distributeurs forment un stator de la turbine, tandis que la ou les roues mobiles forment un rotor de la turbine.

L'invention se rapporte plus spécifiquement à un ensemble de stator formant dans cet exemple un distributeur 20 appartenant au premier étage de la turbine basse pression 9. Bien entendu, un ou plusieurs autres étages de la turbine basse pression 9 et/ou de la turbine haute pression 8 peuvent comprendre un distributeur 20 tel que décrit ci-après. En outre, les compresseurs 5 et/ou 6 peuvent comprendre un redresseur analogue au distributeur 20 décrit ci-après.

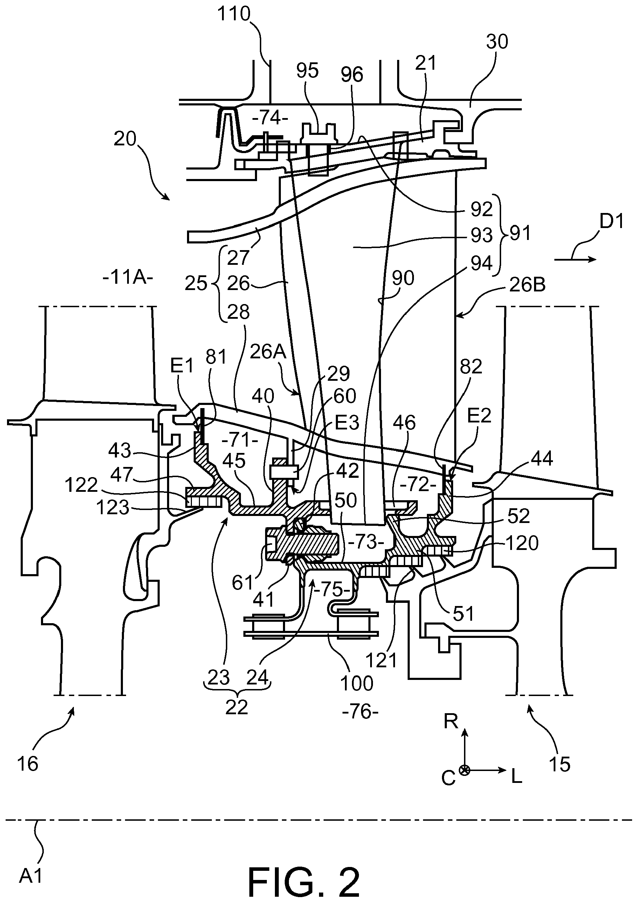

En référence à la figure 2, le distributeur 20 présente un axe central longitudinal qui coïncide avec l'axe A1 du turboréacteur 2. A cet égard, la direction longitudinale L est aussi appelée direction axiale.

Le distributeur 20 comprend une virole radialement externe 21, aussi appelée « virole externe » et une virole radialement interne 22, aussi appelée « virole interne ».

La virole interne 22 comprend une partie amont 23 et une partie aval 24 formant deux pièces distinctes l'une de l'autre.

Dans cet exemple, la partie amont 23 et la partie aval 24 sont toutes deux annulaires.

La virole externe 21, la partie amont 23 de la virole interne 22 et la partie aval 24 de la virole interne 22 forment chacune une pièce qui s'étend circonférentiellement autour de l'axe central A1 parallèle à la direction longitudinale L. Ces pièces sont sensiblement concentriques et de préférence annulaires.

La partie amont 23 et la partie aval 24 de la virole interne 22 s'étendent chacune radialement à l'intérieur de la virole externe 21.

Dans cet exemple, la virole externe 21 est montée fixement à un carter 30 de la turbine 9, le carter 30 et le distributeur 20 appartenant tous deux au stator de la turbine 9.

La virole externe 21, la partie amont 23 de la virole interne 22, la partie aval 24 de la virole interne 22 et le carter 30 sont réalisés dans un matériau leur permettant de résister à des contraintes mécaniques et thermiques relativement importantes, dans cet exemple un matériau métallique par exemple à base de nickel ou de cobalt.

Le distributeur 20 comprend par ailleurs une pluralité d'aubes 25 en matériau composite à matrice céramique (ci-après « CMC ») qui se succèdent circonférentiellement autour de l'axe A1.

La figure 2 montre une unique aube 25. La description qui suit se réfère à cette aube 25 étant entendu que les autres aubes, non représentées sur cette figure, sont dans cet exemple identiques à cette aube 25.

De manière connue en soi, l'aube 25 comprend une pale 26, une plateforme radialement externe 27, aussi appelée « plateforme externe », et une plateforme radialement interne 28 aussi appelée « plateforme interne ». La pale 26 comprend un bord d'attaque 26A et un bord de fuite 26B configurés pour diriger le flux primaire 10A provenant de la chambre de combustion 7 sur des aubes d'une roue mobile 15 située en aval du distributeur 20.

Le distributeur 20 et la roue mobile 15 appartiennent dans cet exemple au même étage de la turbine 9. La figure 2 montre aussi une roue mobile 16 en amont du distributeur 20, cette roue mobile 16 appartenant dans cet exemple à la turbine haute pression 8.

L'aube 25 du distributeur 20 s'étend radialement entre la virole externe 21 et la virole interne 22 de sorte que la pale 26 s'étende au travers de la veine primaire 11A.

La plateforme interne 28 de l'aube 25 comprend un bras radial 29 formant une portion de liaison destinée à relier cette aube 25 à la virole interne 22.

Dans cet exemple, la virole interne 22 comprend un bras radial 40 formant une portion de liaison correspondante.

Le bras radial 40 est venu de matière avec la partie amont 23 de la virole interne 22. Dans un mode de réalisation non représenté, la portion de liaison de la virole interne 22 est un bras radial solidaire de la partie aval 24 de la virole interne 22.

Dans la configuration de la figure 2, dite « configuration assemblée », les bras radiaux 29 et 40 sont axialement en regard l'un de l'autre et comprennent chacun un logement recevant un moyen de liaison 60.

Plus précisément, pour chacun des bras radiaux 29 et 40, le logement correspondant est formé par un orifice traversant ce bras radial de part en part selon la direction longitudinale L de manière à déboucher d'une part sur une face amont et d'autre part sur une face aval de ce bras radial.

En configuration assemblée, le logement du bras radial 29 et celui du bras radial 40 sont alignés axialement l'un par rapport à l'autre et maintenus sensiblement alignés par ledit moyen de liaison 60.

Dans cet exemple, le moyen de liaison 60 est un pion reçu d'une part dans le logement du bras radial 29 et d'autre part dans le logement du bras radial 40.

Le pion 60 est en l'occurrence monté avec du jeu dans le logement du bras radial 29 pour autoriser une dilatation de ce pion 60 lors du fonctionnement de la turbomachine 2. En effet, le pion 60 est dans cet exemple réalisé dans un matériau métallique tandis que l'aube 25 et en particulier le bras radial 29 de sa plateforme interne 28 sont en CMC entraînant une dilatation thermique différentielle de ces éléments.

Ainsi, les bras radiaux 29 et 40 coopèrent de manière à relier l'une à l'autre, via le pion 60, l'aube 25 et la partie amont 23 de la virole interne 22.

La virole interne 22 comprend en outre deux portions de liaison 41 et 42 respectivement venues de matière avec la partie amont 23 et de la partie aval 24 de cette virole interne 22 afin de relier ces parties amont 23 et aval 24 l'une à l'autre.

Dans cet exemple, pour chacune des portions de liaison 41 et 42, cette portion de liaison forme un bras radial comprenant un orifice traversant ce bras radial de part en part selon la direction longitudinale L de manière à déboucher d'une part sur une face amont et d'autre part sur une face aval de ce bras radial.

En configuration assemblée, le bras radial 41 de la partie amont 23 s'étend en regard du bras radial 42 de la partie aval 24 de sorte que l'orifice du bras radial 41 soit sensiblement aligné avec celui du bras radial 42.

Un moyen de liaison 61 tel qu'un boulon traverse ces orifices pour maintenir les bras radiaux 41 et 42 l'un contre l'autre et maintenir ainsi la partie amont 23 et la partie aval 24 dans la configuration assemblée.

La virole interne 22 comprend par ailleurs un bras radial amont 43 venu de matière avec la partie amont 23 et un bras radial aval 44 solidaire de la partie aval 24.

D'une part, le bras radial amont 43 et le bras radial 40 de la partie amont 23 délimitent longitudinalement entre eux un premier espace interne 71 de la virole interne 22. Ce premier espace interne 71 est délimité radialement vers l'intérieur par un tronçon longitudinal 45 de la partie amont 23, ce tronçon longitudinal 45 reliant les bras radiaux 40 et 43 l'un à l'autre. Ce premier espace interne 71 est délimité radialement vers l'extérieur par la plateforme interne 28 de l'aube 25.

Pour empêcher l'introduction, au sein de ce premier espace interne 71, de gaz chauds circulant dans la veine primaire 11A, le distributeur 20 comprend un premier organe d'étanchéité 81 s'étendant entre le bras radial amont 43 et la plateforme interne 28 de l'aube 25.

Dans cet exemple, le premier organe d'étanchéité 81 comprend une languette annulaire s'étendant circonférentiellement autour de l'axe A1. Cette languette 81 est fendue pour faciliter montage.

Dans un autre mode de réalisation non représenté, le premier organe d'étanchéité 81 comprend plusieurs languettes s'étendant circonférentiellement autour de l'axe A1 et placées circonférentiellement bout à bout de manière à former ensemble un organe d'étanchéité annulaire.

La plateforme interne 28 de l'aube 25 comprend, au niveau d'une extrémité amont de cette plateforme, une première gorge. En configuration assemblée, cette première gorge reçoit une partie radialement externe du premier organe d'étanchéité 81.

Le bras radial amont 43 comprend une rainure formant une face dite d'étanchéité. En configuration assemblée, cette face d'étanchéité est axialement en appui sur une face dite d'appui formée par une partie radialement interne du premier organe d'étanchéité 81 (voir figure 2).

D'autre part, lorsque la partie amont 23 et la partie aval 24 de la virole interne 22 sont assemblées l'une avec l'autre selon la configuration de la figure 2, le bras radial 40 de la partie amont 23 et le bras radial aval 44 de la partie aval 24 délimitent longitudinalement entre eux un deuxième espace interne 72 de la virole interne 22. Ce deuxième espace interne 72 est délimité radialement vers l'intérieur par un tronçon longitudinal 46 de la partie amont 23 qui s'étend longitudinalement en aval du bras radial 40 et par un tronçon 51 aval de la partie aval 24. Ce deuxième espace interne 72 est délimité radialement vers l'extérieur par la plateforme interne 28 de l'aube 25.

Pour empêcher l'introduction, au sein de ce deuxième espace interne 72, de gaz chauds circulant dans la veine primaire 11A, le distributeur 20 comprend un deuxième organe d'étanchéité 82 s'étendant entre le bras radial aval 44 et la plateforme interne 28 de l'aube 25.

Le deuxième organe d'étanchéité 82 est similaire au premier organe d'étanchéité 81 et comprend dans cet exemple une languette annulaire fendue s'étendant circonférentiellement autour de l'axe A1. De manière alternative, le premier organe d'étanchéité 81 peut comprendre plusieurs languettes placées circonférentiellement bout à bout de manière à former un organe d'étanchéité annulaire.

La plateforme interne 28 de l'aube 25 comprend, au niveau d'une extrémité aval de cette plateforme, une deuxième gorge. En configuration assemblée, cette deuxième gorge reçoit une partie radialement externe du deuxième organe d'étanchéité 82.

Le bras radial aval 44 comprend une rainure formant une face d'étanchéité. En configuration assemblée, cette face d'étanchéité est axialement en appui sur une face d'appui formée par une partie radialement interne du deuxième organe d'étanchéité 82.

Les rainures des bras radiaux amont 43 et aval 44 qui viennent d'être décrites forment ainsi des demi-logements pour le premier et le deuxième organe d'étanchéité 81 et 82, respectivement, autorisant un montage par translation axiale, c'est-à-dire le long de la direction longitudinale L, des parties amont 23 et aval 24 de la virole interne 22 lors de l'assemblage du distributeur 20 (voir plus loin ci-dessous).

Il va maintenant être décrit plus précisément la géométrie des parties amont 23 et aval 24 de la virole interne 22 en référence à la figure 2.

Les tronçons longitudinaux 45 et 46 de la partie amont 23 s'étendent de manière sensiblement parallèle à l'axe A1 au niveau d'une même coordonnée radiale R.

Le bras radial amont 43 s'étend radialement vers l'extérieur depuis une extrémité amont du tronçon longitudinal 45. Le bras radial 40 s'étend radialement vers l'extérieur depuis une extrémité aval du tronçon longitudinal 45 et depuis une extrémité amont du tronçon longitudinal 46. Le bras radial 41 s'étend radialement vers l'intérieur depuis l'extrémité aval du tronçon longitudinal 45 et depuis l'extrémité amont du tronçon longitudinal 46.

La partie aval 24 comprend un tronçon longitudinal 50. Le bras radial 42 s'étend radialement vers l'extérieur depuis une extrémité amont de ce tronçon longitudinal 50.

La partie aval 24 comprend par ailleurs le tronçon 51 précité, ce tronçon 51 formant des marches et s'étendant vers l'aval et radialement vers l'extérieur à partir d'une extrémité aval du tronçon longitudinal 50. Le bras radial 44 s'étend radialement vers l'extérieur depuis une extrémité aval de ce tronçon 51.

La partie aval 24 comprend aussi un bras d'appui 52 s'étendant radialement vers l'extérieur depuis une partie intermédiaire du tronçon 51.

En configuration assemblée, les bras 42 et 52 ainsi que les tronçons 50 et 51 de la partie aval 24 s'étendent radialement à l'intérieur du tronçon longitudinal 46 de la partie amont 23. Une extrémité aval du tronçon longitudinal 46 de la partie amont 23 vient en appui radialement sur le bras d'appui 52 de la partie aval 24.

Le bras radial 42 et le bras d'appui 52 de la partie aval 24 délimitent longitudinalement entre eux un troisième espace interne 73 de la virole interne 22. Ce troisième espace interne 73 est délimité radialement vers l'intérieur par le tronçon longitudinal 50 de la partie aval 24 et radialement vers l'extérieur par le tronçon longitudinal 46 de la partie amont 23.

Plus généralement, en configuration assemblée, la partie aval 24 s'étend totalement en aval du bras radial 41 de la partie amont 23 et en aval du bras radial 29 de l'aube 25. Les bras radiaux 40 et 43 ainsi que le tronçon longitudinal 45 de la partie amont 23 s'étendent en amont du bras radial 29 de l'aube 25 tandis que le tronçon longitudinal 46 de la partie amont 23 s'étend en aval du bras radial 29 de l'aube 25. Le bras radial 41 de la partie amont 23 est sensiblement aligné avec le bras radial 29 de l'aube 25 selon la direction radiale R.

Dans cet exemple, chacun des bras radiaux amont 43 et aval 44 de la virole interne 22 présente un sommet E1/E2 radialement externe situé radialement au-delà d'un sommet E3 radialement interne du bras radial 29 de l'aube 25 lorsque celle-ci est montée sur la virole externe 21.

L'invention permet néanmoins d'assembler la virole interne 22 avec l'aube 25 par translation axiale des parties amont 23 et aval 24 de cette virole interne 22 dans un sens respectif.

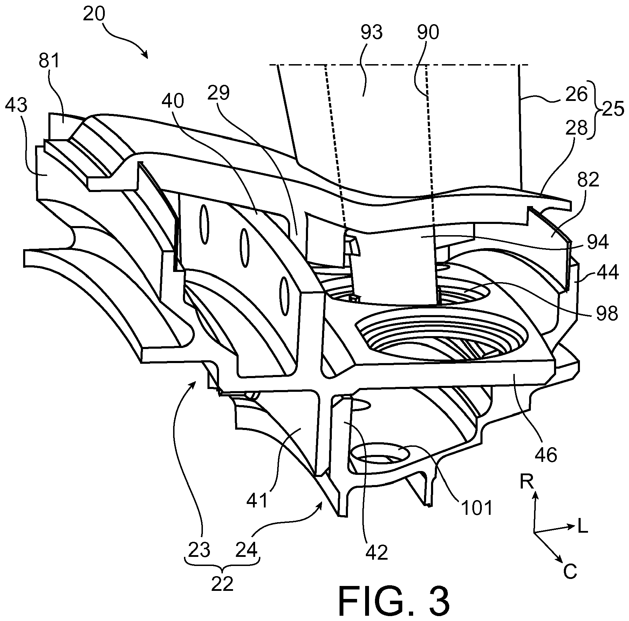

Une séquence d'assemblage est décrite ci-après en référence aux figures 3 à 7 qui montrent différentes parties d'un distributeur 20 dont la partie inférieure - incluant la virole interne 22, le premier organe d'étanchéité 81, le deuxième organe d'étanchéité 82, ainsi que le bras radial 29 et la plateforme interne 28 de l'aube 25 - est similaire à celle du distributeur 20 de la figure 2.

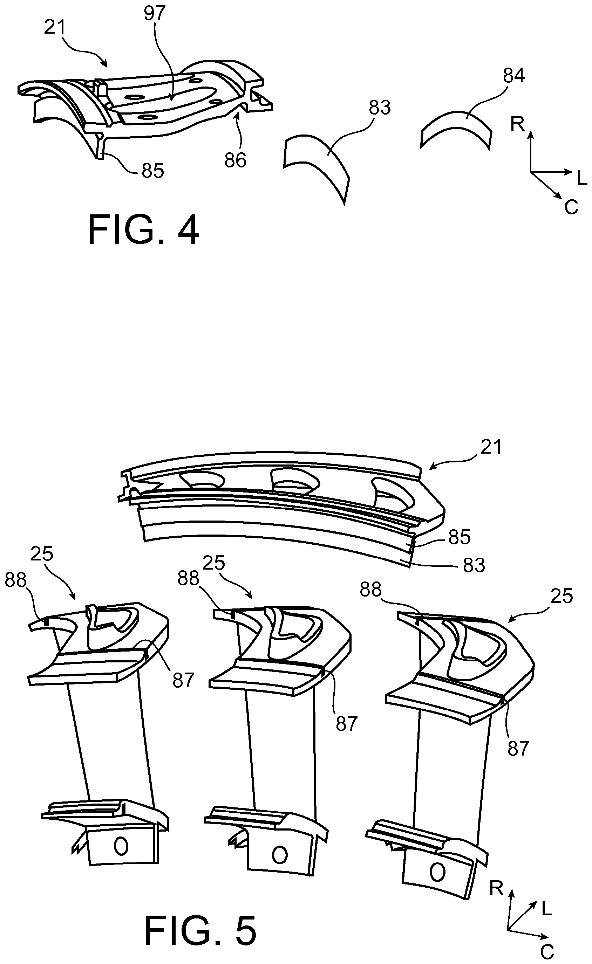

La figure 4 montre une virole externe 21 et deux organes d'étanchéité 83 et 84 semblables aux organes d'étanchéité 81 et 82. Les organes d'étanchéité 83 et 84 visent à assurer l'étanchéité d'une partie radialement externe du distributeur 20.

Dans cet exemple, la virole externe 21 comprend une lèvre 85 formant une face d'étanchéité amont et une rainure 86 formant une face d'étanchéité aval.

Pour passer de la configuration de la figure 4 à celle de la figure 5, une extrémité radialement externe de l'organe d'étanchéité 83 est placée contre la lèvre 85, en appui sur ladite face d'étanchéité amont de la virole externe 21. Une extrémité radialement externe de l'organe d'étanchéité 84 est placée au sein de la rainure 86, en appui sur ladite face d'étanchéité aval de la virole externe 21.

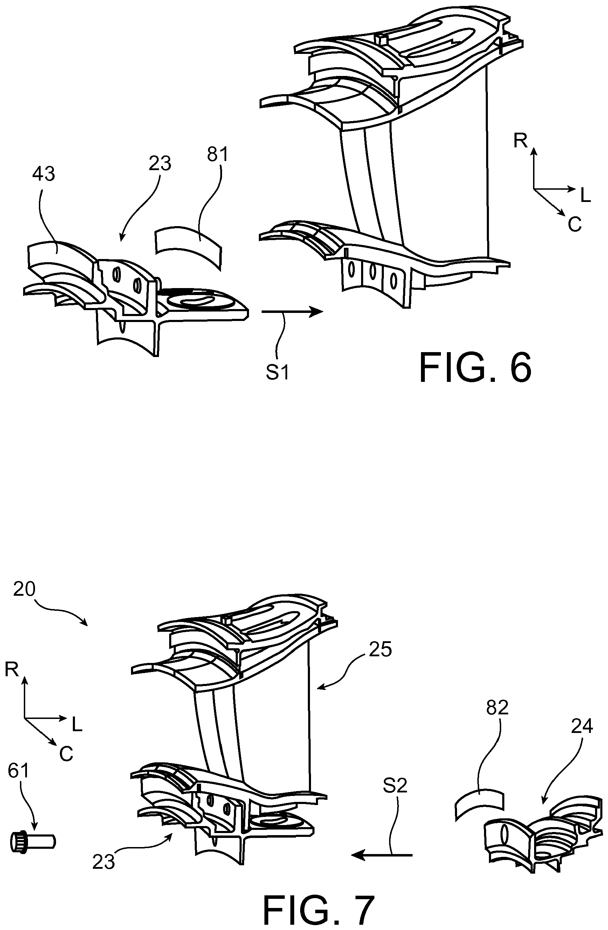

Pour passer de la configuration de la figure 5 à celle de la figure 6, les aubes 25 ici représentées au nombre de trois sont plaquées radialement contre la virole externe 21 de sorte qu'une extrémité radialement interne des organes d'étanchéité 83 et 84 pénètre dans l'une respective des gorges 87 et 88 réalisées dans chacune des aubes 25.

A partir de la configuration de la figure 6, le premier organe d'étanchéité 81 est positionné dans ladite première gorge des aubes 25 et la partie amont 23 de la virole interne 22 est déplacée par translation axiale par rapport aux aubes 25 dans un premier sens S1 allant de l'amont vers l'aval pour atteindre la configuration de la figure 7.

A partir de la configuration de la figure 7, le deuxième organe d'étanchéité 82 est positionné dans ladite deuxième gorge des aubes 25 et la partie aval 24 de la virole interne 22 est déplacée par translation axiale par rapport aux aubes 25 dans un deuxième sens S2 allant de l'aval vers l'amont pour atteindre la configuration assemblée de la figure 3.

En référence aux figures 2 et 3, l'aube 25 représentée sur ces figures présente un profil creux formant un logement interne 90 débouchant en une extrémité radialement interne et en une extrémité radialement externe de cette aube 25.

Dans cet exemple, il est disposé dans le logement interne 90 de l'aube 25 une chemise 91 en matériau métallique épousant sensiblement ce logement interne 90.

En référence à la figure 2, la chemise 91 a une forme globalement longiligne dans la direction radiale R.

La chemise 91 comprend une extrémité radialement externe 92 formant une plateforme et un corps 93 relié à la plateforme 92 et comprenant, radialement à l'opposé de la plateforme 92, une extrémité 94 formant une extrémité radialement interne de cette chemise 91.

Le corps 93 de la chemise 91 a une forme sensiblement évasée selon la direction radiale R, présentant des dimensions longitudinale L et circonférentielle C plus importantes au niveau de la plateforme 92 qu'au niveau de l'extrémité radialement interne 94.

Cela permet notamment d'insérer la chemise 91 dans le logement interne 90 de l'aube 25 par translation radiale dans un sens allant de la virole externe 21 à la virole interne 22 du distributeur 20.

Après insertion, la chemise 91 est fixée à la virole externe 21 par sa plateforme 92, à l'aide de moyens de fixation 95 tels que des vis coopérant avec des moyens de liaison tels que des orifices filetés (non représentés) réalisés dans la virole externe 21. Les moyens de fixation 95 traversent des ouvertures 96 ménagées dans la plateforme 92.

Les dimensions relatives du logement interne 90 de l'aube 25 et du corps 93 de la chemise 91 sont telles que ces pièces puissent se déplacer l'une par rapport à l'autre dans la direction radiale R sous l'effet de leur dilatation thermique différentielle.

De manière générale, le logement interne 90 de l'aube 25 délimite ainsi un canal radial configuré pour acheminer de l'air de ventilation depuis une cavité annulaire externe 74 s'étendant radialement à l'extérieur de la virole externe 21 vers une cavité d'admission 75 (voir ci-après).

Dans un mode de réalisation non représenté, le canal radial d'acheminement d'air est dépourvu de chemise de sorte que l'air de ventilation acheminé dans ce canal radial entre en contact avec le logement interne 90 de l'aube 25.

Dans l'exemple des figures 2 et 3, le canal radial comprend la chemise 91 de sorte que l'air de ventilation acheminé dans ce canal radial n'entre pas en contact avec le logement interne 90 de l'aube 25.

Plus précisément, la chemise 91 comprend un orifice traversant radialement cette chemise 91 de part en part de manière à déboucher d'une part au niveau de la plateforme 92 et d'autre part au niveau de l'extrémité radialement interne 94. La forme de cet orifice est sensiblement similaire à la forme externe du corps 93 de la chemise 91 et donc à la forme du logement interne 90 de l'aube 25.

Le corps 93 de la chemise 91 traverse une ouverture 97 de la virole externe 21 (visible sur la figure 4) ainsi que le logement interne 90 de l'aube 25 de sorte que sa plateforme 92 soit en appui radial sur une surface externe de la virole externe 21, que son corps 93 soit logé dans le logement interne 90 de l'aube 25 et que son extrémité radialement interne 94 débouche à l'extérieur de ce logement interne 90 au niveau de la plateforme interne 28 de l'aube 25.

En référence aux figures 2 et 3, la chemise 91 est plus précisément agencée de sorte que son extrémité radialement interne 94 traverse une ouverture 98 réalisée dans ledit tronçon longitudinal 46 de la partie amont 23 de la virole interne 22.

Lors de l'assemblage du distributeur 20, avant mise en place de la partie amont 23 de la virole interne 22 selon la configuration de la figure 7, il convient de placer la chemise 91 dans une position dans laquelle son extrémité 94 est positionnée radialement à l'extérieur par rapport à la position radiale du tronçon longitudinal 46 de la partie amont 23. La chemise 91 peut ensuite être insérée dans le logement interne 90 de l'aube 25 jusqu'à ce que son extrémité 94 traverse ladite ouverture 98 réalisée dans ledit tronçon longitudinal 46.

En configuration assemblée, l'air de ventilation provenant de la cavité annulaire externe 74 peut ainsi être acheminé à travers l'aube 25 jusque dans ledit troisième espace interne 73 de la virole interne 22, via l'orifice réalisé dans la chemise 91.

Dans cet exemple, le tronçon longitudinal 50 de la partie aval 24 de la virole interne 22 porte un organe d'injection 100. L'organe d'injection 100 de la figure 2 est un injecteur à buses conventionnel.

L'organe d'injection 100 s'étend radialement sous la partie aval 24 de la virole interne 22.

L'organe d'injection 100 contient la cavité d'admission 75 précitée et est configuré pour mettre en communication fluidique cette cavité d'admission 75 avec une cavité interne 76 délimitée radialement à l'extérieur par la virole interne 22.

La cavité d'admission 75 est en communication fluidique avec ledit troisième espace interne 73 de la virole interne 22 grâce à des ouvertures 101 réalisées dans le tronçon longitudinal 50 de la partie aval 24 de la virole interne 22 (voir figure 3).

De manière connue en soi, la virole interne 22 porte un matériau abradable 120 destiné à coopérer avec des léchettes 121 de la roue mobile 15 de manière à former un joint d'étanchéité dynamique aval entre la cavité interne 76 et la veine primaire 11A (voir figure 2). La virole interne 22 porte aussi un matériau abradable 122 destiné à coopérer avec des léchettes 123 de la roue mobile 16 de manière à former un joint d'étanchéité dynamique amont entre la cavité interne 76 et la veine primaire 11A.

Dans l'exemple de la figure 2, le matériau abradable 120 est porté par le tronçon 51 aval de la partie aval 24 de la virole interne 22 tandis que le matériau abradable 122 est porté par un support 47 solidaire de la partie amont 23 de la virole interne 22.

Bien entendu, la description qui précède n'est aucunement limitative.

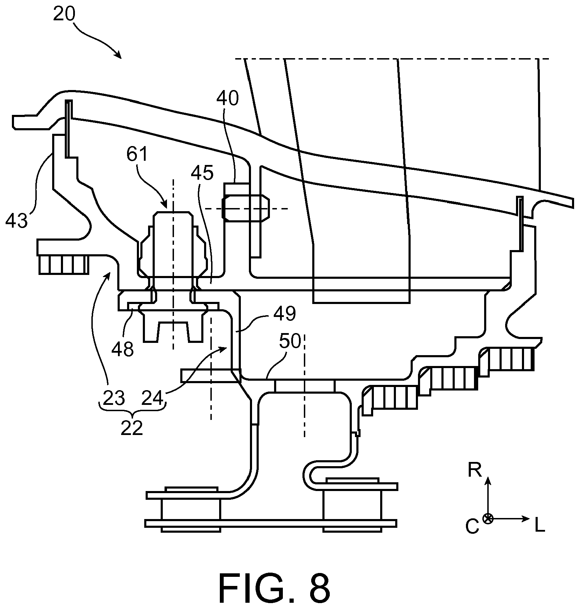

Par exemple, dans le mode de réalisation de la figure 8, la partie amont 23 et la partie aval 24 de la virole interne 22 sont reliées l'une à l'autre par des portions de liaison s'étendant longitudinalement. A la différence du mode de réalisation de la figure 2, la portion de liaison de la partie amont 23 est dans cet exemple formée par ledit tronçon longitudinal 45 reliant les bras radiaux 40 et 43 l'un à l'autre, tandis que la portion de liaison de la partie aval 24 est formée par un bras axial 48 relié à ladite extrémité amont du tronçon longitudinal 50 par un tronçon radial 49.

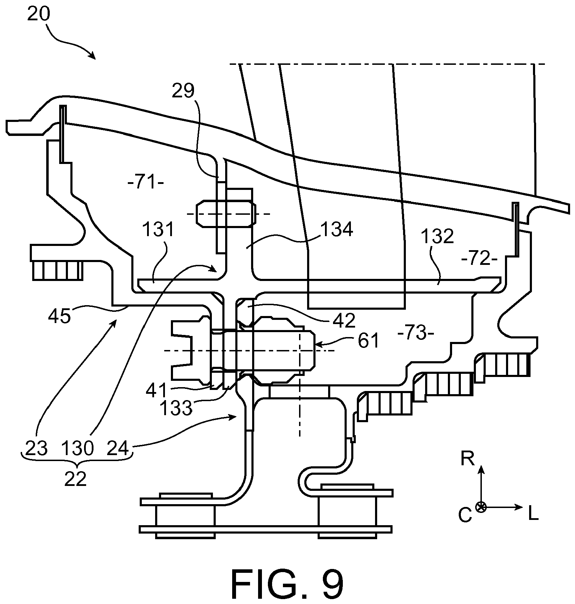

Un autre mode de réalisation est représenté à la figure 9. Ce mode de réalisation se distingue essentiellement de celui de la figure 2 en ce que la virole interne 22 comprend une partie intermédiaire 130 formant une pièce distincte de chacune des parties amont 23 et aval 24.

La partie intermédiaire 130 est ici annulaire.

Dans cet exemple, la partie intermédiaire 130 comprend un tronçon longitudinal amont 131, un tronçon longitudinal aval 132, un bras radial interne 133 et un bras radial externe 134. En configuration assemblée :
- le tronçon longitudinal amont 131 vient en appui sur le tronçon longitudinal 45 de la partie amont 23 de manière à délimiter radialement vers l'intérieur ledit premier espace interne 71 de la virole interne 22,
- le tronçon longitudinal aval 132 est similaire au tronçon longitudinal 46 de la partie amont 23 du distributeur 20 de la figure 2, le tronçon longitudinal aval 132 délimitant radialement vers l'intérieur ledit deuxième espace interne 72 de la virole interne 22 et délimitant radialement vers l'extérieur ledit troisième espace interne 73 de la virole interne 22,
- le bras radial interne 133 est enserré entre le bras radial 41 de la partie amont 23 et le bras radial 42 de la partie aval 24 de sorte que la partie intermédiaire 130 soit solidaire des parties amont 23 et aval 24,
- le bras radial externe 134 remplit la même fonction que le bras radial 40 de la partie amont 23 du distributeur 20 de la figure 2, en reliant la virole interne 22 au bras radial 29 de l'aube 25.

## Revendications

1. Ensemble (20) de stator pour turbomachine (2) présentant un axe central longitudinal (Al) et comprenant une virole externe (21) s'étendant autour dudit axe central longitudinal (A1) , une virole interne (22) concentrique à la virole externe (21) et une aube (25) s'étendant radialement entre la virole interne (22) et la virole externe (21), l'aube (25) étant reliée à la virole interne (22) via un premier moyen de liaison (60), l'aube (25) délimitant un canal (90) configuré pour acheminer de l'air de ventilation depuis une cavité (74) s'étendant radialement à l'extérieur de la virole externe (21) vers une cavité (76) s'étendant radialement à l'intérieur de la virole interne (22), la virole interne (22) comprenant une partie amont (23) et une partie aval (24) formant deux pièces distinctes l'une de l'autre et s'étendant respectivement d'un côté axialement amont et d'un côté axialement aval dudit premier moyen de liaison (60) lorsque celles-ci sont dans une configuration assemblée, la partie amont (23) étant configurée pour être placée, lors de l'assemblage de la virole interne (22), dans la configuration assemblée par translation axiale de cette partie amont (23) par rapport à l'aube (25) dans un premier sens (S1) allant dudit côté amont vers ledit côté aval, la partie aval (24) étant configurée pour être placée, lors de l'assemblage de la virole interne (22), dans la configuration assemblée par translation axiale de cette partie aval (24) par rapport à l'aube (25) dans un deuxième sens (S2) allant dudit côté aval vers ledit côté amont, l'ensemble comprenant des deuxièmes moyens de liaison (61) reliant la partie amont (23) et la partie aval (24) de la virole interne (22) l'une à l'autre de manière à les maintenir dans ladite configuration assemblée,
***caractérisé en* ce *que*** *l'ensemble (20) comprend un premier organe d'étanchéité (81) solidaire d'une extrémité amont d'une plateforme radialement interne (28) de l'aube (25)* et *un deuxième organe d'étanchéité (82) solidaire d'une extrémité aval de la plateforme radialement interne (28) de l'aube (25), la partie amont (23) de la virole interne (22) comprenant une face d'étanchéité axialement en appui sur le premier organe d'étanchéité (81), la partie aval (24) de la virole interne (22) comprenant une face d'étanchéité axialement en appui sur le deuxième organe d'étanchéité* (82).

2. Ensemble (20) selon la revendication 1, dans lequel la partie amont (23) et/ou la partie aval (24) de la virole interne (22) sont annulaires.

3. Ensemble (20) selon la revendication 1 ou 2, dans lequel chacun parmi le premier et le deuxième organe d'étanchéité (81, 82) est une languette d'étanchéité s'étendant circonférentiellement autour de l'axe central longitudinal (A1) et présentant une partie radialement externe logée dans une gorge respective de la plateforme radialement interne (28) de l'aube (25) et une partie radialement interne formant une face d'appui pour ladite face d'étanchéité de la partie amont (23) et aval (24) respectivement.

4. Ensemble (20) selon l'une quelconque des revendications précédentes, **caractérisé en ce que** le premier organe d'étanchéité (81) s'étend entre un bras radial amont (43) venu de matière avec la partie amont (23) et la plateforme interne (28) de l'aube (25) et **en ce que** le deuxième organe d'étanchéité (82) s'étend entre un bras radial aval (44), solidaire de la partie aval (24), et la plateforme interne (28) de l'aube (25).

5. Ensemble (20) selon l'une quelconque des revendications 1 à 4, dans lequel les deuxièmes moyens de liaison (61) comprennent des boulons.

6. Ensemble (20) selon l'une quelconque des revendications 1 à 5, dans lequel les deuxièmes moyens de liaison (61) s'étendent chacun soit axialement soit radialement.

7. Ensemble (20) selon l'une quelconque des revendications 1 à 6, dans lequel la virole interne (22) comprend une portion de liaison (40, 134) coopérant avec une portion de liaison (29) de l'aube (25), le premier moyen de liaison (60) traversant la portion de liaison (40, 134) de la virole interne (22) et la portion de liaison (29) de l'aube (25) de manière à relier l'une à l'autre la virole interne (22) et l'aube (25).

8. Ensemble (20) selon la revendication 7, dans lequel la portion de liaison (40) de la virole interne (22) est formée par un bras radial de la partie amont (23) ou de la partie aval (24) de cette virole interne (22).

9. Ensemble (20) selon la revendication 7, dans lequel la virole interne (22) comprend une partie intermédiaire (130) formant une pièce distincte de chacune des parties amont (23) et aval (24), cette partie intermédiaire (130) étant fixée aux parties amont (23) et aval (24) lorsque celles-ci sont dans ladite configuration assemblée, la portion de liaison (134) de la virole interne (22) étant formée par un bras radial de la partie intermédiaire (130) de cette virole interne (22) .

10. Ensemble (20) selon l'une quelconque des revendications 1 à 9, dans lequel la virole interne (22) et la virole externe (21) comprennent chacune un matériau métallique et l'aube (25) comprend un matériau composite à matrice céramique.

11. Turbine (8, 9) de turbomachine (2), comprenant un ensemble (20) selon l'une quelconque des revendications 1 à 10.

12. Procédé d'assemblage d'un ensemble (20) selon l'une quelconque des revendications 1 à 10, ce procédé comprenant une première étape d'assemblage de l'aube (25) avec la virole externe (21) et une deuxième étape d'assemblage de la virole interne (22) avec l'aube (25) assemblée avec la virole externe (21) lors de la première étape, la deuxième étape comprenant une translation axiale de la partie amont (23) dans ledit premier sens (S1) et une translation axiale de la partie aval (24) dans ledit deuxième sens (S2).

## Patentansprüche

1. Statorbaugruppe (20) für ein Turbotriebwerk (2), die eine Längsmittelachse (A1) aufweist und einen Außenmantel (21), der sich um die Längsmittelachse (A1) herum erstreckt, einen Innenmantel (22), der mit dem Außenmantel (21) konzentrisch ist, und eine Schaufel (25) umfasst, die sich radial zwischen dem Innenmantel (22) und dem Außenmantel (21) erstreckt, wobei die Schaufel (25) über ein erstes Verbindungsmittel (60) mit dem Innenmantel (22) verbunden ist, wobei die Schaufel (25) einen Kanal (90) begrenzt, der dafür konfiguriert ist, Belüftungsluft von einem Hohlraum (74), der sich radial außerhalb des Außenmantels (21) erstreckt, zu einem Hohlraum (76) zu leiten, der sich radial innerhalb des Innenmantels (22) erstreckt, wobei der Innenmantel (22) einen stromaufwärtigen Teil (23) und einen stromabwärtigen Teil (24) umfasst, die zwei voneinander getrennte Stücke bilden und sich jeweils von einer axial stromaufwärtigen Seite und einer axial stromabwärtigen Seite des ersten Verbindungsmittels (60) erstrecken, wenn sie sich in einer zusammengebauten Konfiguration befinden, wobei der stromaufwärtige Teil (23) dafür konfiguriert ist, beim Zusammenbau des Innenmantels (22) durch axiale Verschiebung dieses stromaufwärtigen Teils (23) in Bezug auf die Schaufel (25) in einer ersten Richtung (S1), die von der stromaufwärtigen Seite zur stromabwärtigen Seite verläuft, in der zusammengebauten Konfiguration platziert zu werden, wobei der stromabwärtige Teil (24) dafür konfiguriert ist, beim Zusammenbau des Innenmantels (22) durch axiale Verschiebung dieses stromabwärtigen Teils (24) in Bezug auf die Schaufel (25) in einer zweiten Richtung (S2), die von der stromabwärtigen Seite zur stromaufwärtigen Seite verläuft, in der zusammengebauten Konfiguration platziert zu werden, wobei die Baugruppe zweite Verbindungsmittel (61) umfasst, die den stromaufwärtigen Teil (23) und den stromabwärtigen Teil (24) des Innenmantels (22) miteinander verbinden, um sie in der zusammengebauten Konfiguration zu halten,
**dadurch gekennzeichnet, dass** die Baugruppe (20) ein erstes Dichtungsorgan (81), das fest mit einem stromaufwärtigen Ende einer radial inneren Plattform (28) der Schaufel (25) verbunden ist, und ein zweites Dichtungsorgan (82) umfasst, das fest mit einem stromabwärtigen Ende der radial inneren Plattform (28) der Schaufel (25) verbunden ist, wobei der stromaufwärtige Teil (23) des Innenmantels (22) eine Dichtungsfläche umfasst, die axial am ersten Dichtungsorgan (81) aufliegt, wobei der stromabwärtige Teil (24) des Innenmantels (22) eine Dichtungsfläche umfasst, die axial am zweiten Dichtungsorgan (82) aufliegt.

2. Baugruppe (20) nach Anspruch 1, wobei der stromaufwärtige Teil (23) und/oder der stromabwärtige Teil (24) des Innenmantels (22) ringförmig sind.

3. Baugruppe (20) nach Anspruch 1 oder 2, wobei jedes des ersten und des zweiten Dichtungsorgans (81, 82) ein Dichtungsstreifen ist, der sich in Umfangsrichtung um die Längsmittelachse (A1) herum erstreckt und einen radial äußeren Teil, der in einer jeweiligen Nut der radial inneren Plattform (28) der Schaufel (25) untergebracht ist, und einen radial inneren Teil aufweist, der eine Auflagefläche für die Dichtungsfläche des stromaufwärtigen (23) bzw. stromabwärtigen Teils (24) bildet.

4. Baugruppe (20) nach einem der vorstehenden Ansprüche, **dadurch gekennzeichnet, dass** sich das erste Dichtungsorgan (81) zwischen einem stromaufwärtigen radialen Arm (43), der mit dem stromaufwärtigen Teil (23) einstückig ist, und der inneren Plattform (28) der Schaufel (25) erstreckt, und dadurch, dass sich das zweite Dichtungsorgan (82) zwischen einem stromabwärtigen radialen Arm (44), der fest mit dem stromabwärtigen Teil (24) verbunden ist, und der inneren Plattform (28) der Schaufel (25) erstreckt.

5. Baugruppe (20) nach einem der Ansprüche 1 bis 4, wobei die zweiten Verbindungsmittel (61) Bolzen umfassen.

6. Baugruppe (20) nach einem der Ansprüche 1 bis 5, wobei sich die zweiten Verbindungsmittel (61) jeweils entweder axial oder radial erstrecken.

7. Baugruppe (20) nach einem der Ansprüche 1 bis 6, wobei der Innenmantel (22) einen Verbindungsabschnitt (40, 134) umfasst, der mit einem Verbindungsabschnitt (29) der Schaufel (25) zusammenwirkt, wobei das erste Verbindungsmittel (60) so durch den Verbindungsabschnitt (40, 134) des Innenmantels (22) und den Verbindungsabschnitt (29) der Schaufel (25) hindurchgeht, dass es den Innenmantel (22) und die Schaufel (25) miteinander verbindet.

8. Baugruppe (20) nach Anspruch 7, wobei der Verbindungsabschnitt (40) des Innenmantels (22) von einem radialen Arm des stromaufwärtigen Teils (23) oder des stromabwärtigen Teils (24) dieses Innenmantels (22) gebildet wird.

9. Baugruppe (20) nach Anspruch 7, wobei der Innenmantel (22) einen Zwischenteil (130) umfasst, der ein von jedem des stromaufwärtigen (23) und des stromabwärtigen Teils (24) getrenntes Stück bildet, wobei dieser Zwischenteil (130) am stromaufwärtigen (23) und dem stromabwärtigen Teil (24) befestigt ist, wenn sich diese in der zusammengebauten Konfiguration befinden, wobei der Verbindungsabschnitt (134) des Innenmantels (22) von einem radialen Arm des Zwischenteils (130) dieses Innenmantels (22) gebildet wird.

10. Baugruppe (20) nach einem der Ansprüche 1 bis 9, wobei der Innenmantel (22) und der Außenmantel (21) jeweils ein Metallmaterial umfassen und die Schaufel (25) ein Verbundmaterial mit Keramikmatrix umfasst.

11. Turbine (8, 9) für ein Turbotriebwerk (2), die eine Baugruppe (20) nach einem der Ansprüche 1 bis 10 umfasst.

12. Verfahren zum Zusammenbauen einer Baugruppe (20) nach einem der Ansprüche 1 bis 10, wobei dieses Verfahren einen ersten Schritt des Zusammenbauens der Schaufel (25) mit dem Außenmantel (21) und einen zweiten Schritt des Zusammenbauens des Innenmantels (22) mit der Schaufel (25), die im ersten Schritt mit dem Außenmantel (21) zusammengebaut wurde, umfasst, wobei der zweite Schritt eine axiale Verschiebung des stromaufwärtigen Teils (23) in der ersten Richtung (S1) und eine axiale Verschiebung des stromabwärtigen Teils (24) in der zweiten Richtung (S2) umfasst.

## Claims

1. A stator assembly (20) for a turbomachine (2) having a central longitudinal axis (A1) and comprising an outer shroud (21) extending around said central longitudinal axis (A1), an inner shroud (22) concentric with the outer shroud (21) and a blade (25) extending radially between the inner shroud (22) and the outer shroud (21), the blade (25) being connected to the inner shroud (22) via a first connecting means (60), the blade (25) delimiting a channel (90) configured to convey ventilation air from a cavity (74) extending radially outside the outer shroud (21) to a cavity (76) extending radially inside the inner shroud (22), the inner shroud (22) comprising an upstream portion (23) and a downstream portion (24) forming two parts separate from each other and extending respectively from an axially upstream side and from an axially downstream side of said first connecting means (60) when said parts are in an assembled configuration, the upstream portion (23) being configured to be placed, when assembling the inner shroud (22), in the assembled configuration by axial translation of this upstream portion (23) relative to the blade (25) in a first direction (S1) extending from said upstream side to said downstream side, the downstream portion (24) being configured to be placed, when assembling the inner shroud (22), in the assembled configuration by axial translation of this downstream portion (24) relative to the blade (25) in a second direction (S2) extending from said downstream side to said upstream side, the assembly comprising second connecting means (61) connecting the upstream portion (23) and the downstream portion (24) of the inner shroud (22) to each other so as to maintain them in said assembled configuration,
**characterized in that** the assembly (20) comprises a first sealing member (81) integral with an upstream end of a radially inner platform (28) of the blade (25) and a second sealing member (82) integral with a downstream end of the radially inner platform (28) of the blade (25), the upstream portion (23) of the inner shroud (22) comprising a sealing face axially bearing on the first sealing member (81), the downstream portion (24) of the inner shroud (22) comprising a sealing face axially bearing on the second sealing member (82).

2. The assembly (20) according to claim 1, wherein the upstream portion (23) and/or the downstream portion (24) of the inner shroud (22) are annular.

3. The assembly (20) according to claim 1 or 2, wherein each of the first and the second sealing member (81, 82) is a sealing tab extending circumferentially around the central longitudinal axis (A1) and having a radially outer portion housed in a respective groove of the radially inner platform (28) of the blade (25) and a radially inner portion forming a bearing face for said sealing face of the upstream (23) and downstream (24) portion respectively.

4. The assembly (20) according to any one of the preceding claims, **characterized in that** said first sealing member (81) extends between an upstream arm (43) integral with the upstream portion (23) and the inner platform (28) of the blade (25), and **in that** the second sealing member (82) extends between a downstream radial arm (44), integral with the downstream portion (24), and the inner platform (28) of the blade (25).

5. The assembly (20) according to any one of claims 1 to 4, wherein the second connecting means (61) comprise bolts.

6. The assembly (20) according to any one of claims 1 to 5, wherein the second connecting means (61) each extend either axially or radially.

7. The assembly (20) according to any one of claims 1 to 6, wherein the inner shroud (22) comprises a connecting portion (40, 134) cooperating with a connecting portion (29) of the blade (25), the first connecting means (60) passing through the connecting portion (40, 134) of the inner shroud (22) and the connecting portion (29) of the blade (25) so as to connect the inner shroud (22) and the blade (25) to each other.

8. The assembly (20) according to claim 7, wherein the connecting portion (40) of the inner shroud (22) is formed by a radial arm of the upstream portion (23) or of the downstream portion (24) of this inner shroud (22).

9. The assembly (20) according to claim 7, wherein the inner shroud (22) comprises an intermediate portion (130) forming a part separate from each of the upstream (23) and downstream (24) portions, this intermediate portion (130) being fixed to the upstream (23) and downstream (24) portions when the latter are in said assembled configuration, the connecting portion (134) of the inner shroud (22) being formed by a radial arm of the intermediate portion (130) of this inner shroud (22).

10. The assembly (20) according to any one of claims 1 to 9, wherein the inner shroud (22) and the outer shroud (21) each comprise a metal material and the blade (25) comprises a ceramic matrix composite material.

11. A turbine (8, 9) of turbomachine (2), comprising an assembly (20) according to any one of claims 1 to 10.

12. A method for assembling an assembly (20) according to any one of claims 1 to 10, this method comprising a first step of assembling the blade (25) with the outer shroud (21) and a second step of assembling the inner shroud (22) with the blade (25) assembled with the outer shroud (21) during the first step, the second step comprising an axial translation of the upstream portion (23) in said first direction (S1) and an axial translation of the downstream portion (24) in said second direction (S2).
